(19) Europäisches Patentamt
European Patent Office
Office européen des brevets

(11) Veröffentlichungsnummer: **0 042 536**
**B1**

(12) # EUROPÄISCHE PATENTSCHRIFT

(45) Veröffentlichungstag der Patentschrift: **27.07.83**

(21) Anmeldenummer: **81104431.2**

(22) Anmeldetag: **10.06.81**

(51) Int. Cl.³: **C 07 D 413/04,** C 08 K 5/45, D 06 L 3/12 // (C07D413/04, 333/74, 263/56)

(54) **Benzoxazolyldihydronaphthothiophenverbindungen sowie deren Verwendung als optische Aufheller.**

(30) Priorität: **21.06.80 DE 3023301**

(43) Veröffentlichungstag der Anmeldung: **30.12.81 Patentblatt 81/52**

(45) Bekanntmachung des Hinweises auf die Patenterteilung: **27.07.83 Patentblatt 83/30**

(84) Benannte Vertragsstaaten: **CH DE LI**

(56) Entgegenhaltungen:
**keine**
**AT-B-299 110**
**CH-A-443 664**
**CH-A-477 502**
**DE-A-1 953 809**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Harnisch, Horst, Dr., Heinenbusch 4, D-5203 Much (DE)**

EP 0 042 536 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Benzoxazolyldihydronaphthothiophenverbindungen sowie deren Verwendung als optische Aufheller

Gegenstand der Erfindung sind Verbindungen der Formel

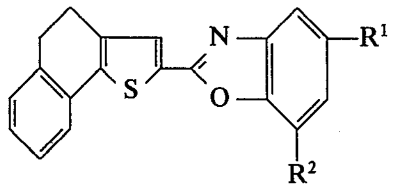

(I)

worin unabhängig voneinander

$R^1$ und $R^2$ $CH_3$ oder Cl bedeuten.

Die Herstellung der neuen Verbindungen erfolgt in an sich bekannter Weise (vgl. DE-A-1 917 601, entspricht US-A-3 786 064 bzw. AT-B-299 110), indem man beispielsweise Carbonsäuren der Formel

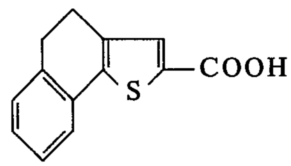

(II)

oder deren funktionelle Derivate mit o-Aminophenolen der Formel

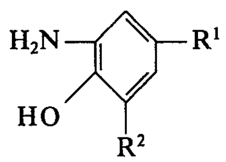

(III)

kondensiert.

Diese Kondensation erfolgt zweckmäßigerweise in Gegenwart eines sauren Katalysators wie Borsäure, p-Toluolsulfonsäure oder Zinkchlorid in der Schmelze oder in einem inerten, hoch siedenden organischen Lösungsmittel wie Dichlorbenzol, Trichlorbenzol, Xylol, p-Cymol, Dimethylformamid, Propylenglykol, Diethylenglykoldiethylether, Triethylenglykoldiethylether oder N-Methylpyrrolidon bei Temperaturen von etwa 160 bis 300°.

Als funktionelle Derivate der Carbonsäuren (II) kommen insbesondere die Säurechloride und $C_1-C_2$-Alkylester in Betracht.

Bei einer anderen Verfahrensweise wird zunächst aus der Carbonsäure der Formel (II) und dem Aminophenol der Formel (III) bei 140 bis 200° C das Amid der Formel

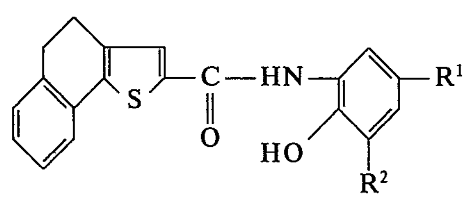

(IV)

hergestellt und dieses dann mit Hilfe eines wasserabspaltenden Mittels in die entsprechende Benzoxazol-Verbindung der Formel (I) übergeführt (vgl. AT-B-299 110).

Die neuen Verbindungen der Formel (I), die sich von den Aufhellern der AT-B-299 110 durch die spezielle m-Position der beiden $Cl/CH_3$-Substituenten $R^1/R^2$ unterscheiden, eignen sich hervorragend zum optischen Aufhellen von hochmolekularen organischen Materialien, insbesondere von hydrophoben Fasermaterialien, wie Polyamid-, Celluloseester- und vor allem Polyesterfasern.

Es können die üblichen Färbeverfahren zur Anwendung gelangen, wobei die Polyesterfasermaterialien zweckmäßigerweise nach dem Hochtemperaturverfahren (bei 130° C) oder dem Thermosolverfahren gefärbt werden.

Die neuen Aufheller zeichnen sich dabei durch besondere Ergiebigkeit und gute Lichtechtheit aus.

Wegen ihrer hohen Wärmestabilität eignen sich die erfindungsgemäßen Verbindungen (I) darüber hinaus auch vorzüglich zum Weißtönen von Spinn- und Gießmassen polymerer Materialien. Hervorzuheben ist ihre Eignung zur Einarbeitung in Weich-PVC-Massen, worin sich die neuen Stoffe gut verteilen lassen.

## Beispiel 1

Zu einer Suspension von

| | |
|---|---|
| 207 g | Dihydronaphtho-[1,2-b]-thiophen-2-carbonsäure in |
| 930 ml | wasserfreiem o-Dichlorbenzol, enthaltend 3 Tropfen Pyridin, läßt man innerhalb von 30 Min. bei 70° C |
| 69 ml | $SOCl_2$ zutropfen. Man läßt noch 1 Stunde bei 70° C nachrühren, bevor der $SOCl_2$-Überschuß i. Vak. abdestilliert wird. Nach dem Abkühlen auf 20° C werden |
| 160,2 g | 4,6-Dichlor-2-aminophenol zugegeben. Man rührt 5 Stunden bei 50—60° C, dann 1 Stunde bei 150° C und schließlich 6 Stunden bei 150—160° C, bevor man auf 120° C abkühlen läßt. Nach Zugabe von |
| 13,5 g | Borsäure wird 18 Stunden am Wasserabscheider gekocht. Danach werden 480 ml o-Dichlorbenzol abdestilliert. Die 160° C heiße Schmelze wird in |
| 1,5 l | Methanol (auf 65° C vorgewärmt) eingetragen. Nach dem Abkühlen auf 20° C wird abgesaugt, mit Methanol gewaschen, bei 80° C getrocknet. Roh-Ausbeute: 306 g (91% der Theorie). Nach dem Umkristallisieren aus Toluol (mit Tonsil klären) beträgt die Reinausbeute: 267 g (80% der Theorie). |

Der erhaltene Aufheller entspricht der Formel

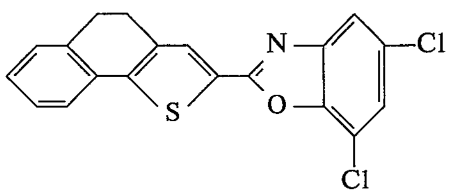

(1)

(Schmelzpunkt: 195°C).

## Beispiel 2

23 g 4,5-Dihydronaphtho-[1,2-b]-thiophen-2-carbonsäure vom Schmelzpunkt 208—211° C, hergestellt durch 3stündige Verseifung des in Tetrahedron Letters 1968, 1317, beschriebenen Ethylesters mit 3%iger Natronlauge und anschließendes Ansäuern, werden mit 13,7 g 4,6-Dimethyl-2-amino-phenol und 1 g Borsäure in 80 ml 1,2-Dichlorbenzol im schwachen Stickstoffstrom unter Rühren und Abdestillieren von Wasser 3 Stunden auf 180° C erhitzt. Das Lösungsmittel wird im Vakuum abdestilliert und der Rückstand aus 100 ml Methylcyclohexan umkristallisiert. Der kristalline Niederschlag wird abgesaugt, mit Methanol gewaschen und bei 50° im Vakuum getrocknet. Man erhält 15 g Verbindung der Formel

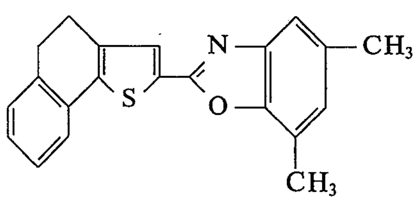

(2)

(Schmelzpunkt: 117°C).

In analoger Weise wird unter Verwendung der entsprechenden Ausgangsverbindungen folgende Verbindung hergestellt:

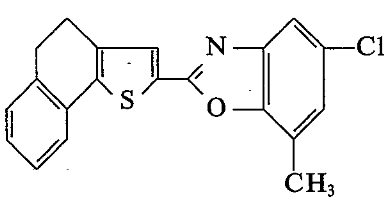

(3)

(Schmelzpunkt: 168°C).

Dieser Weißtöner ergibt auf Polyesterfasermaterialien, nach dem HT- oder Thermosolverfahren gefärbt, hervorragende Aufhelleffekte.

Beispiel 3

65 Teile eines durch Emulsionspolymerisation hergestellten Polyvinylchlorid-Pulvers, 35 Teile eines handelsüblichen Dioctylphthalats als Weichmacher, 2 Teile eines handelsüblichen Zinndilaurats als Stabilisator und 0,05 Teile Verbindung der Formel (1) werden zu einem Teig angerührt und anschließend auf einem Dreiwalzenkalander bei 160—170° zu einer Folie ausgewalzt. Die Folie ist dann hervorragend und lichtecht aufgehellt. Ähnliche Aufhellungseffekte werden erzielt, wenn man anstelle des obengenannten Aufhellungsmittels die Verbindungen der Formeln (2) oder (3) einsetzt.

Beispiel 4

100 Teile Hochdruckpolyethylen-Granulat und 0,05 Teile Verbindung (1) werden in einem Vibrationsmischer innig vermengt und anschließend in einem Extruder bei 180—210° über eine Breitschlitzdüse zu einer Folie in der Stärke zwischen 50 und 100 µ ausgezogen. Die Folie ist hervorragend aufgehellt. Das Aufhellungsmittel ist in Polyethylen vollkommen wanderungsbeständig.

**Patentansprüche**

1. Verbindungen der Formel

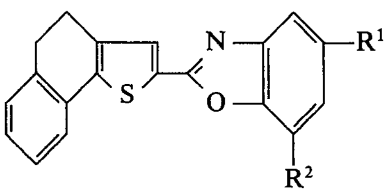

(I)

worin unabhängig voneinander

$R^1$ und $R^2$ $CH_3$ oder Cl bedeuten.

2. Verbindungen gemäß Anspruch 1, dadurch gekennzeichnet, daß

$R^1$ Cl und
$R^2$ $CH_3$ oder Cl bedeuten.

3. Verbindung gemäß Anspruch 1, dadurch gekennzeichnet, daß

$R^1$ und $R^2$ Cl bedeuten.

4. Verwendung der Verbindungen gemäß Anspruch 1 zum optischen Aufhellen von hochmolekularen organischen Materialien.

5. Verwendung der Verbindung gemäß Anspruch 1 zum optischen Aufhellen von Weich-PVC.

**Claims**

1. Compounds of the formula

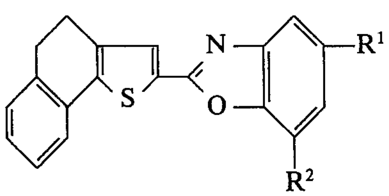

(I)

wherein, independently of one another,

$R^1$ and $R^2$ denote $CH_3$ or Cl.

2. Compounds according to Claim 1, characterised in that

$R^1$ denotes Cl and

$R^2$ denotes $CH_3$ or Cl.

3. Compound according to Claim 1, characterised in that

$R^1$ and $R^2$ denote Cl.

4. Use of the compounds according to Claim 1 for the optical brightening of high molecular weight organic materials.
5. Use of the compound according to Claim 1 for the optical brightening of plasticised PVC.

**Revendications**

1. Composés de formule

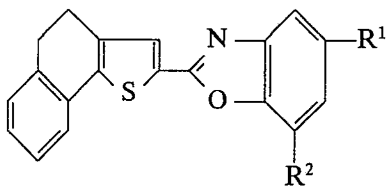

(I)

dans laquelle, indépendamment l'un de l'autre,

$R^1$ et $R^2$ représentent $CH_3$ ou Cl.

2. Composés suivant la revendication 1, caractérisés en ce que

$R^1$ représente Cl et
$R^2$ représente $CH_3$ ou Cl.

3. Composé suivant la revendication 1, caractérisé en ce que $R^1$ et $R^2$ représentent Cl.
4. Utilisation des composés suivant la revendication 1 pour l'azurage optique de matières organiques de haut poids moléculaire.
5. Utilisation du composé suivant la revendication 1 pour l'azurage optique de PVC mou.